# EUROPEAN PATENT SPECIFICATION

(11) **EP 2 679 657 B1**
(45) Date of publication and mention of the grant of the patent: **06.01.2016**
(21) Application number: 12173950.2
(22) Date of filing: 27.06.2012
(51) Int. Cl.: C10G 31/10, C10M 175/00, G01N 24/08, C10L 1/08

(54) **A METHOD FOR SEPARATING CATALYST FINES FROM AN OIL STREAM**
VERFAHREN ZUM ABSCHEIDEN VON KATALYSATORFEINTEILEN AUS EINEM ÖLSTROM
MÉTHODE POUR SÉPARER LES FINES DE CATALYSEUR D'UN FLUX D'HUILE

(43) Date of publication of application: 01.01.2014
(73) Proprietor: Alfa Laval Corporate AB, 221 00 Lund (SE)
(72) Inventor: Englund, Mats, 118 42 Stockholm (SE)
(74) Representative: Alfa Laval Attorneys

(56) References cited:
- US-A- 3 255 104
- US-A- 3 388 054
- US-A- 5 976 357
- US-A1- 2006 217 254
- US-A1- 2010 023 275
- Handbook, HFO: "NOTES ON HEAVY FUEL OIL", American Bureau of Shipping, vol. 31 1 January 1984 (1984-01-01), XP055191463, Retrieved from the Internet: URL:http://www.eagle.org/eagleExternalPort alWEB/ShowProperty/BEA Repository/Rules&Guides/Current/31_HeavyFu elOil/Pub31_HeavyFuelOil [retrieved on 2015-05-26]

## Description

### FIELD OF THE INVENTION

The invention relates to a method for separating catalyst fines from an oil stream.

### BACKGROUND OF THE INVENTION

Fuel oil for diesel engines on board ships and in power stations contains particles of silicon and aluminium compounds (e.g. microporous aluminium silicates or aluminosilicates known as zeolites), called catalyst fines. Catalyst fines are residues from the refining process of crude oil known as catalytic cracking, wherein long hydrocarbon molecules are cracked into shorter molecules. These particles are undesired in the fuel oil since they are abrasive and may cause wear in the engine and auxiliary equipment. The concentration of catalyst fines in the fuel oil normally varies between 0 and 60 ppm. Catalyst fines are in the size range from 0.1 microns (micrometers) to 100 microns. By conventional cleaning in centrifugal separators catalyst fines down to about 3 microns size may be removed. If the size distribution of the catalyst fines in the fuel oil is such that it contains a lot of smaller particles it may be difficult to clean by conventional methods. Fuel oil (e.g. heavy fuel oil, HFO) is usually stored in large bunkers in harbours or the like. The amount and size distribution of cat fines in the fuel oil may vary from one bunker to another and within one bunker since the particles tend to settle. Due to the settling there may also be a long term build up of catalyst fines on the bottom of fuel oil bunkers. The amount and size distribution of cat fines may also vary over the content of the fuel tank in direct connection to the engine.

The limit specified in the ISO 8217-2010 for the sum of the aluminium and silicon elements in bunker oil is 60 ppm. It is desirable to reach below 15 ppm at entry into the engine.

US 3 255 104 discloses a process for removing particulate solids from crude oil, and the temperature of the oil may be measured before treatment in a centrifugal separator. Further, the follow of supplemental liquid to the feed line may be controlled.

US 2010/023275 discloses a system and a method for alkylation process analysis. NMR analysis is used for determining at least one component of a liquid mixture flowing through an alkylation process, which liquid mixture is an acid catalyst for hydrocarbon conversion.

A document entitled "Notes on: Heavy Fuel Oil" published by the American Shipping Bureau in 1984 discloses a process addressing the removal of catalyst particles from an oil stream using a centrifuge with the use of supplemental liquid aid, namely hot water, and wherein temperature and pressure control is performed.

### SUMMARY OF THE INVENTION

It is an object of the invention to cope with the above mentioned variations in the quality of fuel oil and to be able to minimize the amount of catalyst fines in the fuel oil in order to reduce the risk of damage on the engine.

Hence the invention relates to a method for separating catalyst fines from an oil stream comprising the steps of;
- in the centrifugal separator, separating catalyst fines from an inlet oil stream, generating a stream of purified oil,
- obtaining an NMR response signal from an NMR apparatus related to the amount of catalyst fines in the purified oil stream,
- when the NMR response signal indicates an increased amount of catalyst fines in the purified oil stream, adjusting at least one parameter of the separation process in the centrifugal separator such as to increase the performance of separating catalyst fines from the oil stream.

The method includes the step of initiating the addition of or increasing the amount of a separation aid to the inlet oil stream, i.e. upstream of the separator.

By means of the NMR apparatus, particles of catalyst fines may be detected in the oil stream even if they are small. Thus the centrifuging process may be properly adjusted to cope with an increasing amount of catalyst fines of smaller size.

There are various ways of increasing the separation performance in order to enhance the removal of the smaller particles in the oil stream. In particular the parameter of the separation process may be adjusted by decreasing the flow rate of oil through the separator, by increasing the temperature of the oil. The parameter of the separation process is adjusted by initiating the addition of or increasing the amount of a separation aid to the inlet oil stream. The temperature of the oil may be increased up to a certain optimal temperature limit, such as 98°C, as defined by the separation process. Thus one step may be to ensure that the separation process is performed at the defined optimal temperature. In order to minimise the consumption of the separation aid it is beneficial to, as a first step, decrease the flow rate of oil through the separator, increase the temperature of the oil, and then if this is not sufficient to decrease the amount of catalyst fines in the oil stream, as a second or further step to add or increase the amount of the separation aid.

Catalyst fines may be separated from the oil stream by supplying a mixture of oil comprising catalyst fines particles and a liquid separation aid into a separation space of a rotating rotor of the centrifugal separator; separating in the separation space the catalyst fines and the liquid separation aid from the oil by centrifugal force; discharging purified oil from the separation space through a central light phase outlet thereof; and discharging separated smaller particles together with separated liquid separation aid from the separation chamber through a heavy phase outlet of the separation chamber, situated radially outside said central light phase outlet. A method of purifying oil in a centrifugal separator is disclosed in EP 1570036 B1. In addition, denser and/or larger particles may be separated from the oil stream and collected at the radially outer portion of the separation space forming a sludge phase. The sludge phase may be discharged intermittently from the separation space by means of a discharge mechanism.

Thus, in the separation process, the following components may be separated from the oil or the oil-separation aid mixture;
- a light liquid component mainly comprising the purified oil,
- a heavy liquid component comprising water, any added separation aid and smaller catalyst fines, and
- a sludge component comprising larger and denser particles (e.g. catalyst fines, sand, wear particles etc.), and a portion of the heavy phase.

Catalyst fines are of a hydrophilic nature and may thus be extracted from the fuel oil by a liquid separation aid comprising water or another suitable polar solvent. The separation aid is selected from the group consisting of water, a water containing electrolyte such as an inorganic or organic acid, a liquid polymer separation aid or combinations thereof. The separation aid should preferably have a poor solubility or be insoluble in the oil. The separation aid is preferably denser than the oil (i.e. having a density larger than that of the oil). The separation aid may be dispersed, i.e. finely divided, in the inlet oil stream, upstream of the centrifugal separator, extracting catalyst fine particles and coalescing into larger drops forming a liquid phase which is denser than the oil (heavy phase). The separation aid may also be mixed with the oil such as to provide a substantial homogenous mixture of oil and separation aid.

The organic acid may be a carboxylic acid, preferably a monocarboxylic acid. The organic acid may be a formic acid, acetic acid, propionic acid, butyric acid, oxalic acid, 2-ethyl hexanoic acid or citric acid. The inorganic acid may be a phosphoric, hydrochloric, sulphuric, acetic, benzene sulphonic, or chloroacetic acid.

The liquid polymer separation aid may comprise polymer, or polymer mixture, which is liquid at room temperature and is denser than the oil. The polymer or polymer mixture may comprise a polymer selected from alkylene glycols or polyalkylene glycols based on ethylene or propylene, or copolymers of ethylene oxide and propylene oxide. Examples of separation aid in the form of liquid polymers are disclosed in EP 731830 B1. Preferably the separation aid may comprise a polyethylene glycol having a molecular weight of about 100-300 daltons.

The liquid polymer may comprise amphifilic polymers having hydrophilic and hydrophobic parts. Thereby a hydrophobic polymer may be modified to provide hydrophilic properties.

The fuel oil from the bunker or fuel tank may already contain water in small amounts, such as less than 0.5 % w/w (weight/weight).

The separation aid may be introduced into the oil stream in amounts up to 5 % w/w. If a particularly efficient separation aid such as polyethylene glycol is used, the separation aid may be introduced in amounts down to 100 ppm w/w.

The NMR response signal may be derived from ²⁹Si and/or ²⁷Al spectra obtained by the NMR apparatus.

A second NMR response signal related to the amount of catalyst fines in the inlet oil stream may be obtained from an NMR apparatus, which may be either a separate NMR apparatus or the same NMR apparatus as previously described. When the second NMR response signal indicates an increased amount of catalyst fines in the inlet oil stream, at least one parameter of the separation process in the centrifugal separator is adjusted such as to increase the performance of separating catalyst fines from the oil stream, as previously described. Thus the system may adopt the separation process to high amounts of catalyst fines in the inlet oil stream. The amounts of catalyst fines in the inlet oil stream and purified oil stream may also be compared to evaluate the separation efficiency and to adjust parameters of the separation process based on the separation efficiency of the catalyst fines.

The present disclosure further describes a system comprising a centrifugal separator for separating catalyst fines from an oil stream, generating a stream of purified oil, an NMR apparatus arranged to generate an NMR response signal related to the amount of catalyst fines in the purified oil stream, wherein the system is arranged to adjust at least one parameter of the separation process in the centrifugal separator such as to increase the separation performance when the NMR response signal indicates an increased amount of catalyst fines in the purified oil stream.

The centrifugal separator is preferably a disc stack separator which comprises a rotor enclosing a separation space wherein a stack of separation discs is arranged, an inlet for oil to be separated extending into the separation space and a light phase outlet for purified oil extending from the separation space. The centrifugal separator may further comprise a heavy phase outlet extending into the separation space for a liquid phase which is denser than the oil. The centrifugal separator may further comprise discharge ports for a denser particulate phase, a sludge phase, extending from the radially outer portion of the separation space. The separator is preferably configured such that these discharge ports may be opened intermittently, to discharge any sludge collected during the separation process.

The NMR apparatus may comprise means for producing a main magnetic field, a space within said main magnetic field to receive a sample in the form of a portion of the oil stream, a means for exciting a measurable RF magnetization to the sample at an operating frequency defined by said main magnetic field, a means for measuring the RF signal produced by the excited sample, and a means for analyzing the RF signal in order to determine the presence of or amount of catalyst fines in the sample, whereby the apparatus is configured to output a NMR response signal related to the presence of or amount of catalyst fines in the oil stream.

The system may comprise means to control (i.e. measure and/or regulate) the flow rate of oil through the separator, such as by means of flow regulator unit comprising a pump and/or a flow control valve, whereby the processing parameter of the centrifugal separator is adjusted by decreasing the flow rate of oil through the separator.

The system may comprise an oil heater arranged to heat the inlet oil stream, whereby the processing parameter is adjusted by increasing the temperature of the oil, thus decreasing the viscosity of the oil to enhance the separation performance. The system may comprise a dosing unit for supply of a separation aid to the oil stream on the inlet side of the centrifugal separator (inlet oil stream), whereby the processing parameter of the centrifugal separator is adjusted by initiating the addition of or increasing the amount of separation aid.

The system may comprise means to generate a smaller bypass or bleed-off stream of oil, and wherein the NMR apparatus is arranged to act on the bypass or bleed-off stream of oil.

The NMR apparatus may preferably be arranged downstream of the centrifugal separator, such as in connection with the oil outlet of the centrifugal separator.

### BRIEF DESCRIPTION OF THE DRAWINGS

The invention will be further explained by a description of an embodiment in the following with reference to the accompanying drawing.

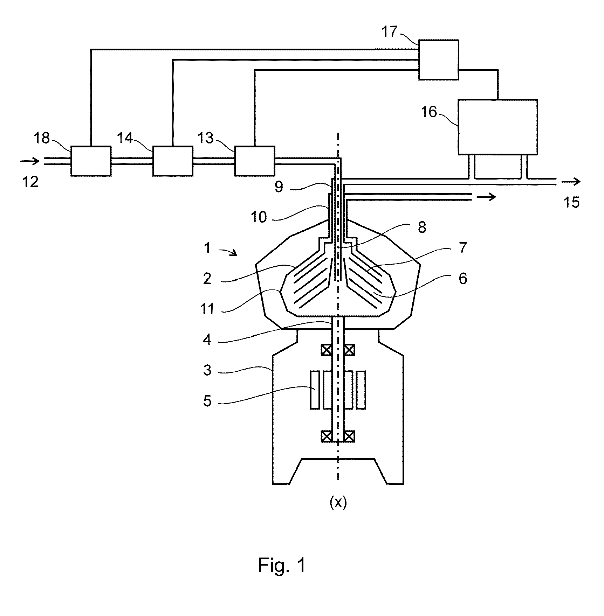

Fig. 1 shows a system useful for the process of the invention.

### DETAILED DESCRIPTION OF AN EMBODIMENT OF THE INVENTION

In Fig. 1 a system is shown comprising a centrifugal separator 1 for separating a liquid mixture of components, such as fuel oil contaminated with water and catalyst fines. The centrifugal separator comprises a rotor 2 supported by a spindle 4 which is rotatably arranged in a frame 3 around an axis of rotation (x). The separator comprises a drive motor 5, which may be arranged to drive the spindle in direct connection as shown or indirectly via a transmission such as belts or gears. The rotor forms within itself a separation chamber 6 wherein a stack of frustoconical separation discs 7 is arranged. An inlet 8 extends into the separation space for supply of the liquid mixture to be separated and a light phase outlet 9 for a separated light liquid component of the mixture (i.e. the purified oil) extends from the central portion of the separation chamber. A heavy phase outlet 10 for a separated heavy liquid component of the mixture (e.g. water and separation aid) extends from a portion of the separation chamber situated radially outside the central light phase outlet. A sludge space is formed as a radially outer portion of the separation chamber. The rotor is provided with a discharge mechanism comprising sludge discharge ports 11 extending from the sludge space for intermittent discharge of the sludge phase (e.g. larger solid particles such as catalyst fines) from the separation chamber.

The inlet 9 of the centrifugal separator is connected to a supply line 12 for an inlet stream of fuel oil to be separated. A temperature conditioning unit 13 includes means to measure the temperature of the oil in the supply line and a heater for heating the oil. A dosing unit 14 for a separation aid is connected to the inlet 9 of the centrifugal separator. A flow regulating unit 18 is arranged to control (i.e. means to measure and/or regulate) the flow rate of oil in the supply line.

The light phase outlet 9 of the centrifugal separator is connected to a delivery line 15 for delivery of a stream of purified fuel oil to the engine. The system further comprises an NMR apparatus 16 arranged to obtain a small sample stream of fuel oil from the delivery line. The NMR apparatus is further described below.

The system includes a control unit 17 arranged to receive data from the NMR apparatus and to communicate with the temperature conditioning unit 13, the dosing unit 14 and the flow regulating unit 18.

During operation of the system, a stream of fuel oil to be purified is supplied to the inlet 8 of the centrifugal separator via the supply line 12. A predetermined amount of separation aid is added to and dispersed (i.e. finely divided) in and mixed with the stream of oil by the dosing unit 14. The dosing unit is arranged such that the oil and separation aid mixture is allowed to interact for a period of time before centrifugation in order to increase the extraction of catalyst fines from the oil into the separation aid. The stream of oil and separation aid thereafter enters into the separation chamber 6 of the centrifugal rotor 2 rotating at high speed. The stream of oil is accelerated into rotation and is introduced into the stack of separation discs 7 where it under the influence of centrifugal forces is separated into a light liquid component mainly comprising the purified oil, a heavy liquid component comprising water, any added separation aid and smaller catalyst fines and a sludge component comprising larger and denser particles (e.g. catalyst fines, sand, wear particles etc.). The light liquid component is transported towards the centre of the separation space where it is discharged through the light phase outlet 9. The heavy liquid component is transported radially outwards in the separation chamber and discharged over the top disc and through the heavy phase outlet 10. The sludge component is collected in the sludge space and discharged intermittently to a space outside the rotor by means of the discharge mechanism.

From the purified oil delivery line 15 a small sample stream of oil is diverted and introduced to the NMR apparatus 16. An example of an NMR apparatus is disclosed in US 2012/0001636 A1. During operation of the NMR apparatus, the sample stream is entered into a region of uniform magnetic field. A wire coil and electronic circuits are provided to both apply radio-frequency (RF) pulses to the sample (transmit) and to detect RF signals from the sample (receive). The operating frequency is defined by the nuclei concerned and the magnitude of the main field. In a typical measurement, the atomic nuclei under study in the sample are first allowed to polarize in the magnetic field. Next, one or more RF pulses are applied to the sample with frequencies at or near the resonance frequency at which the nuclei freely precess in the applied uniform magnetic field. The transmit pulses have the effect of tilting the nucleus polarization relative to the direction of the applied field. After the transmit pulse is ended the nuclei precess and create a time-varying magnetic field in the coil. The time-varying field induces a signal voltage in the coil which may be amplified and recorded. In the NMR apparatus, ²⁹Si and/or ²⁷Al nuclei spectra are obtained from the sample by NMR spectroscopy. From these spectra, the total levels of Al and Si in the oil stream can be identified. The zeolites used as catalyst fines typically contain 20-35 % of Si and 20-10 % Al. Examples of zeolites are ZSM-5 disclosed in US 3702886 and US 4067724, ZSM-11 disclosed in US 3709979, ZSM-12 disclosed in US 3832449, ZSM-23 disclosed in US 4076842, ZSM-35 disclosed in US 4016245, ZSM-38 disclosed in US 4046859 and ZSM-48 disclosed in EP 15132. The levels of one of the elements Al and Si and thus the total level of the two elements may alternatively be estimated if the level of the other element is known from the measurements.

When the total level of Al and Si in the sample exceeds a preset threshold value of 5-15 ppm the control unit is arranged to adjust at least one parameter of the separation process in the centrifugal separator such as to increase the separation performance. As a first step the control unit verifies with the temperature conditioning unit 13 that the separation process is performed at the defined optimal temperature, such as 98°C. As a second step the flow regulating unit is instructed to decrease the flow rate of the oil in the supply line. Thereby each flow element of the oil stream is subjected to the centrifugal forces in the separation space during a longer period of time, thus enhancing the separation performance by enabling smaller particles to be separated from the oil stream. As a further process step, if the total level of Al and Si in the sample still exceeds a preset threshold value, the amount of separation aid from the dosing unit is increased to increase the separation performance. When the separation aid, such as water or polyethylene glycol, is added to the oil stream by the dosing unit, it is preferably dispersed in small droplets in the oil stream. Thus the total area of the interface surface between the separation aid and the oil is increased. When catalyst fines particles in the oil come in contact with the separation aid, they are extracted from the oil and into the separation aid. In the separation space of the separator, the fine droplets of separation aid, water from the oil stream and smaller catalyst fines coalesce into larger drops and eventually forms a liquid phase which is denser than the oil (heavy phase). The heavy phase including smaller catalyst fines is discharged through the heavy phase outlet as previously described. By increasing the amount of separation aid in the oil stream, more catalyst fine particles will come in contact with the droplets of separation aid and thus a larger portion of catalyst fine particles will be extracted from the oil stream into the separation aid and separated from the oil stream as a heavy phase.

## Claims

1. A method for separating catalyst fines from an oil stream comprising the steps of;
- in the centrifugal separator, separating catalyst fines from an inlet oil stream, generating a stream of purified oil,
- obtaining an NMR response signal from an NMR apparatus related to the amount of catalyst fines in the purified oil stream,
- when the NMR response signal indicates an increased amount of catalyst fines in the purified oil stream, adjusting at least one parameter of the separation process in the centrifugal separator such as to increase the performance of separating catalyst fines from the oil stream, wherein the parameter of the separation process is adjusted by initiating the addition of or increasing the amount of separation aid to the inlet oil stream and wherein the separation aid is selected from the group consisting of water, a water containing electrolyte such as an inorganic or organic acid, a liquid polymer separation aid or combinations thereof.

2. A method according to claim 1, wherein the parameter of the separation process is adjusted by decreasing the flow rate of oil through the separator.

3. A method according to any one of the preceding claims, wherein the parameter of the separation process is adjusted by increasing the temperature of the oil.

4. A method according to claim 1, wherein the separation aid comprises polyethylene glycol having a molecular weight of 100-300 daltons.

5. A method according to any one of the preceding claims, wherein the NMR response signal is derived from ²⁹Si and/or ²⁷Al spectra obtained by the NMR apparatus.

6. A method according to any one of the preceding claims, wherein a second NMR response signal related to the amount of catalyst fines in the inlet oil stream is obtained from an NMR apparatus and wherein, when the second NMR response signal indicates an increased amount of catalyst fines in the inlet oil stream, at least one parameter of the separation process in the centrifugal separator is adjusted such as to increase the performance of separating catalyst fines from the oil stream.

## Patentansprüche

1. Verfahren zum Abscheiden von Katalysatorfeinteilen aus einem Ölstrom, das die folgenden Schritte umfasst:
- in dem Zentrifugalabscheider das Abscheiden von Katalysatorfeinteilen aus einem Einlass-Ölstrom, was einen Strom von gereinigtem Öl erzeugt,
- das Erhalten eines NMR-Antwortsignals von einer NMR-Vorrichtung, das mit der Menge von Katalysatorfeinteilen in dem Strom von gereinigtem Öl verbunden ist,
- wenn das NMR-Antwortsignal eine gesteigerte Menge von Katalysatorfeinteilen in dem Strom von gereinigtem Öl anzeigt, das Einstellen wenigstens eines Parameters des Abscheidungsvorgangs in dem Zentrifugalabscheider derart, dass die Leistung des Abscheidens von Katalysatorfeinteilen aus dem Ölstrom gesteigert wird, wobei der Parameter des Abscheidungsvorgangs durch das Einleiten der Zugabe oder das Steigern der Menge von Abscheidungshilfsmittel zu dem Einlass-Ölstrom eingestellt wird und wobei das Abscheidungshilfsmittel aus der Gruppe, die aus Wasser, einem wasserhaltigen Elektrolyt, wie beispielsweise einer anorganischen oder organischen Säure, einem Flüssigpolymer-Abscheidungshilfsmittel oder Kombinationen derselben besteht, ausgewählt ist.

2. Verfahren nach Anspruch 1, wobei der Parameter des Abscheidungsvorgangs durch das Vermindern der Durchflussgeschwindigkeit von Öl durch den Abscheider eingestellt wird.

3. Verfahren nach einem der vorhergehenden Ansprüche, wobei der Parameter des Abscheidungsvorgangs durch das Steigern der Temperatur des Öls eingestellt wird.

4. Verfahren nach Anspruch 1, wobei das Abscheidungshilfsmittel Polyethylenglykol, das eine relative Molekülmasse von 100-300 Dalton hat, umfasst.

5. Verfahren nach einem der vorhergehenden Ansprüche, wobei das NMR-Antwortsignal von ²⁹Si- und/oder ²⁷Al-Spektren, die durch die NMR-Vorrichtung erfasst werden, abgeleitet wird.

6. Verfahren nach einem der vorhergehenden Ansprüche, wobei ein zweites NMR-Antwortsignal, das mit der Menge von Katalysatorfeinteilen in dem Einlass-Ölstrom verbunden ist, von einer NMR-Vorrichtung erfasst wird und wobei, wenn das zweite NMR-Antwortsignal eine gesteigerte Menge von Katalysatorfeinteilen in dem Einlass-Ölstrom anzeigt, wenigstens ein Parameter des Abscheidungsvorgangs in dem Zentrifugalabscheider derart eingestellt wird, dass die Leistung des Abscheidens von Katalysatorfeinteilen aus dem Ölstrom gesteigert wird.

## Revendications

1. Procédé pour séparer des particules fines de catalyseur d'un flux d'huile, comprenant les étapes de:
- séparation, dans le séparateur centrifuge, de particules fines de catalyseur d'un flux d'huile d'entrée, générant un flux d'huile purifiée,
- obtention d'un signal de réponse RMN à partir d'un appareil RMN, associé à la quantité de particules fines de catalyseur dans le flux d'huile purifiée,
- ajustement d'au moins un paramètre du procédé de séparation dans le séparateur centrifuge, lorsque le signal de réponse RMN indique une quantité augmentée de particules fines de catalyseur dans le flux d'huile purifiée, de façon à augmenter les performances de séparation de particules fines de catalyseur du flux d'huile, le paramètre du procédé de séparation étant ajusté en initiant l'ajout ou l'augmentation de la quantité d'adjuvant de séparation au flux d'huile d'entrée et l'adjuvant de séparation étant choisi dans le groupe comprenant l'eau, un électrolyte contenant de l'eau, tel un acide inorganique ou organique, un adjuvant de séparation polymère liquide ou des combinaisons de ces éléments.

2. Procédé selon la revendication 1, le paramètre du procédé de séparation étant ajusté en réduisant le débit de l'huile à travers le séparateur.

3. Procédé selon l'une quelconque des revendications précédentes, le paramètre du procédé de séparation étant ajusté en augmentant la température de huile.

4. Procédé selon la revendication 1, l'adjuvant de séparation comprenant du polyéthylène glycol ayant un poids moléculaire de 100-300 Da.

5. Procédé selon l'une quelconque des revendications précédentes, le signal de réponse RMN étant dérivé des spectres de ²⁹Si et/ou de ²⁷Al obtenus au moyen de l'appareil RMN.

6. Procédé selon l'une quelconque des revendications précédentes, un second signal de réponse RMN associé à la quantité de particules fines de catalyseur dans le flux d'huile d'entrée étant obtenu à partir d'un appareil RMN et au moins un paramètre du procédé de séparation dans le séparateur centrifuge étant ajusté, lorsque le second signal de réponse RMN indique une quantité augmentée de particules fines de catalyseur dans le flux d'huile d'entrée, de façon à augmenter les performances de séparation de particules fines de catalyseur du flux d'huile.
